# EUROPEAN PATENT SPECIFICATION

(11) **EP 2 505 285 B1**
(45) Date of publication and mention of the grant of the patent: **10.01.2018**
(21) Application number: 12153788.0
(22) Date of filing: 03.02.2012
(51) Int. Cl.: B23B 29/04, B23B 31/00, B23B 31/26, B23Q 3/12, B23Q 1/70

(54) **Machine tool and tool holder**
Werkzeugmaschine und Werkzeughalter
Machine-outil et porte-outil

(30) Priority: 31.03.2011 JP 2011079757
(43) Date of publication of application: 03.10.2012
(73) Proprietor: Brother Kogyo Kabushiki Kaisha, Nagoya-shi, Aichi-ken 467-8561 (JP)
(72) Inventor: Ishibashi, Nobuaki, Nagoya-shi, Aichi-ken, 467-8562 (JP); Kanie, Shoji, Nagoya-shi, Aichi-ken, 467-8562 (JP)
(74) Representative: Prüfer & Partner mbB Patentanwälte · Rechtsanwälte

(56) References cited:
- EP-A1- 0 259 517
- EP-A1- 2 123 379
- DE-A1- 3 529 481
- DE-A1- 19 858 801
- JP-A- 1 127 205
- JP-A- 2001 293 624
- JP-A- 2003 019 632
- JP-A- 2005 329 493
- JP-U- H0 570 842
- US-A- 4 630 979

## Description

### TECHNICAL FIELD

The present invention relates to a machine tool according to the preamble of claim 1, which selectively attaches/removes tools held by tool holders to/from a main shaft, and performs processing with individual tools, and such a tool holder used for the machine tool.

### BACKGROUND ART

A machine tool automatically exchanges tools to be attached to a main shaft, and performs various processes with the respective tools. The main shaft is supported by a main-shaft head which is capable of moving up and down, and rotates about its central axis by drive of a main-shaft motor. The machine tool performs a process to be performed by a rotating tool, such as a drilling, a tapping, and a milling. The rotating tool (a drill, a tap, an end mill, etc.) is attached via a tool holder to a lower end part of the main shaft projecting from the main-shaft head, and processes a workpiece by rotating while moving up and down with the main shaft.

Some machine tools comprise a turning tool as a tool for exchange. The turning tool is a tool which presses a tip thereof on a rotating workpiece to turn a surface of the workpiece. The turning tool is attached to the main shaft via a tool holder so as to be used, in the same manner as the rotating tool. The main-shaft motor is locked to restrain the rotation of the turning tool according to rotation of the main shaft.

There is a problem that the turning tool is subjected to force in various directions during processing due to the pressing on the workpiece, and the sufficient rotation locking effect is not obtained only with the lock of the main-shaft motor. In order to deal with this problem, various configurations for locking the rotation of the turning tool are provided (for example, refer to JP 2005-329493 A which discloses a machine tool according to the preamble of claim 1, JP 5-70842 (1993) U, JP 11-10485 (1999) A, and EP 2 123 379 A1).

In the machine tool disclosed in JP 2005-329493 A, a disc-shaped flange is provided around a tool holder holding a turning tool, key grooves are provided at two positions opposite to each other in a radial direction of an outer circumference of the flange, and a main-shaft head supporting a main shaft is provided with keys at a lower end thereof. When the turning tool is attached to the main shaft, the key grooves are engaged with the respective keys, and the rotation of the tool holder is restrained, and thereby the locking of the rotation of the turning tool is realized.

In the machine tool disclosed in JP 5-70842 (1993) U, a pin is provided at a tool holder for holding a turning tool, and a positioning block capable of engaging with the pin is provided in a main-shaft head. The positioning block advances by means of a hydraulic cylinder and engages with the pin of the tool holder attached to the main shaft, and thereby the rotation of the turning tool is locked.

In the machine tool disclosed in JP 11-10485 (1999) A, couplings having many teeth are mounted on an outer circumference of a main shaft and on an inner circumference of the main-shaft head respectively in a main-shaft head, and the machine tool is provided with a joint coupling capable of engaging with the teeth of both couplings, and the joint coupling is provided at a position opposite to both couplings so as to advance under oil pressure or air pressure. The joint coupling advances when a turning tool is attached, and engages with the couplings of the main shaft and the main-shaft head, and the rotation of the main shaft is restrained and thereby the locking of the rotation of the turning tool is realized.

The machine tool disclosed in JP 11-10485 (1999) A has a problem that in the main-shaft head, the machine tool has a complicated configuration in which the couplings having highly precise teeth, the joint coupling, and a cylinder for operating the joint coupling with oil pressure or air pressure are incorporated, and thereby the product cost increases.

In the machine tools disclosed in JP 2005-329493 A and JP 5-70842 (1993) U, since the locking of the rotation is realized outside the main-shaft head, the rotation locking effect is obtained with the simple configurations. However, in the machine tool disclosed in JP 5-70842 (1993) U, the pin and the positioning block are engaged with each other at only one position in a circumferential direction of the tool holder, and the sufficient rotation locking effect is not obtained. Moreover, it is difficult to strengthen rigidity against the force in a radial direction (a direction normal to an axial direction of the turning tool) applied to the turning tool during processing, and to prevent the movement of the turning tool caused by the force, and then it is difficult to realize a stable process.

In the machine tool disclosed in JP 2005-329493 A, the keys and the key grooves are engaged with each other at two positions in a circumferential direction of the tool holder and the sufficient rotation locking effect is obtained. However, there is a problem that the flange provided with the key grooves projects throughout a circumference of the tool holder, and the flange may interfere with a grip for gripping the tool holder when the tools are exchanged.

Moreover, there is a problem that the turning tool held by the tool holder minutely rotates within engagement gaps between the keys and the key grooves, and the process precision by the turning tool may fall.

In the machine tool disclosed in JP 2005-329493 A, the main-shaft motor is driven to rotate in one direction when the turning tool is attached, and the keys and the key grooves are adapted to keep in a pressed state. However, since a direction of the turning force which acts on the turning tool during processing varies, it is difficult to control the minute rotation.

The keys and the key grooves are engaged with each other at two positions opposite to each other in the radial direction, and they do not have a function for restricting the force in a depth direction of the key grooves. Therefore, there is a problem that the turning tool moves in the depth direction of the key grooves during processing due to the force in the radial direction which applies in the various directions, and the process precision falls by the synergism with the minute rotation as described above.

### SUMMARY OF THE INVENTION

The object of the present invention is to provide a machine tool which reliably prevents the rotation and the movement of a turning tool to be attached to a rotatable main shaft via a tool holder with a simple configuration, and which permits a turning process with high process precision, and to provide the tool holder. This object is achieved by a machine tool having the features of claim 1. The present invention is further developed as defined in the dependent claims.

The machine tool according to a preferred embodiment is a machine tool that selectively attaches/removes a rotating tool or a turning tool which is used at a time of stopping rotation of a main shaft via respective tool holders to/from an end part of the main shaft which is supported by a main-shaft head and which rotates about a central axis thereof, and that processes a workpiece with the rotating tool or the turning tool attached to the main shaft, comprising: a rotation locking flange provided on a part of an outer circumference of the tool holder for holding the turning tool to widen outward in a radial direction of the tool holder; two engaging holes formed at positions which are different from each other in a circumferential direction of the rotation locking flange; and two engaging projections projecting from the main-shaft head so as to engage with the respective engaging holes.

The rotation locking flange widening outward in the radial direction is provided on the part of the outer circumference of the tool holder, and the two engaging projections projecting from the main-shaft head are engaged with the two engaging holes formed in the rotation locking flange respectively, and thereby the rotation and the movement of the turning tool held by the tool holder are prevented. Engagement portions of the engaging holes and the engaging projections are located within an angular range of the rotation locking flange, i.e., at positions which are not opposite to each other in the radial direction, and thereby the movement by the force in the radial direction which acts in various directions during processing can be reliably prevented. The rotation locking flange can be arranged so as not to interfere with gripping means which moves and then grips the tool holder, and it does not obstruct the tool exchanging.

The machine tool according to a preferred embodiment is characterized in that the engaging holes are provided at positions such that an inner angle formed by center lines extending from centers of the engaging holes to a center of the tool holder respectively is not less than 85 degrees and less than 100 degrees.

The engaging holes of the rotation locking flange are provided at positions such that the inner angle formed by the center lines extending from the centers of the engaging holes to the center of the tool holder respectively is not less than 85 degrees and less than 100 degrees, and thereby the movement by the force in the radial direction which acts in the various directions is reliably prevented by the engagement of at least one of the engaging holes and the engaging projections.

The machine tool according to a preferred embodiment is characterized in that the engaging projections have reduced diameter parts whose diameters are reduced towards their tips, and the main-shaft head supports the engaging projections slidably, and has biasing means for biasing the engaging projections towards a tip side.

The engaging holes of the rotation locking flange are in contact with the reduced diameter parts of the engaging projections at appropriate positions, and push up the engaging projections against the biasing by the biasing means, and thereby the engaging holes are engaged with the engaging projections closely without gaps, and the rotation and the movement of the turning tool are prevented reliably.

The machine tool according to a preferred embodiment is characterized by further comprising the tool grip which moves and then grips the respective tool holder when the rotating tool or the turning tool is attached/removed, wherein the engaging projections are provided on a side opposite to a side on which the tool grip moves.

The engaging projections projecting from the main-shaft head are provided on a side opposite to a side on which the gripping means for gripping the tool holder moves. The rotation locking flange provided with the engaging holes can be arranged so as not to interfere with the gripping means, and it does not obstruct the tool exchanging.

The machine tool according to a preferred embodiment is characterized in that the engaging holes are oblong holes extending in the radial direction of the tool holder.

Scraps generated during processing may catch on the engaging holes. When the engaging holes and the engaging projections are engaged with each other, there is hardly any gap between the engaging holes and the engaging projections. The scraps get stuck between the engaging holes and the engaging projections. There is a problem that the scraps cause injure to the engaging holes and the engaging projections, and thereby the positions of the engaging holes are shifted during processing. When the engaging holes are oblong holes, since there is gaps between the engaging holes and the engaging projections even if the engaging holes and the engaging projections are engaged with each other, the scraps fall from the gaps between the engaging projections and the oblong holes. Therefore, the engaging holes and the engaging projections are not injured.

A simple configuration that the rotation locking flange provided with the two engaging holes is provided on the tool holder so as to widen outward in the radial direction of the tool holder, and that the two engaging projections which can be engaged with the respective engaging holes are provided on the main-shaft head permits the reliable prevention of the rotation and the movement in the radial direction of the tool holder, and permits the turning process with high process precision. Moreover, the rotation locking flange can be arranged without interfering with the gripping means for gripping the tool holder, and it does not obstruct the tool exchanging.

### DESCRIPTION OF THE DRAWINGS

FIG. 1 is a side view schematically showing a configuration of an essential part of a machine tool.
FIG. 2 is a perspective view showing a tool holder seen from a side on which a tool is attached.
FIG. 3 is a perspective view showing the tool holder seen from an opposite side of FIG. 2.
FIG. 4 is a perspective view showing an engagement portion of a rotation locking flange and engaging projections from the back.
FIG. 5 is a top view showing the engagement portion of the rotation locking flange and the engaging projections from below.
FIG. 6 is an explanatory view showing a supporting structure of the engaging projection.

### EMBODIMENT

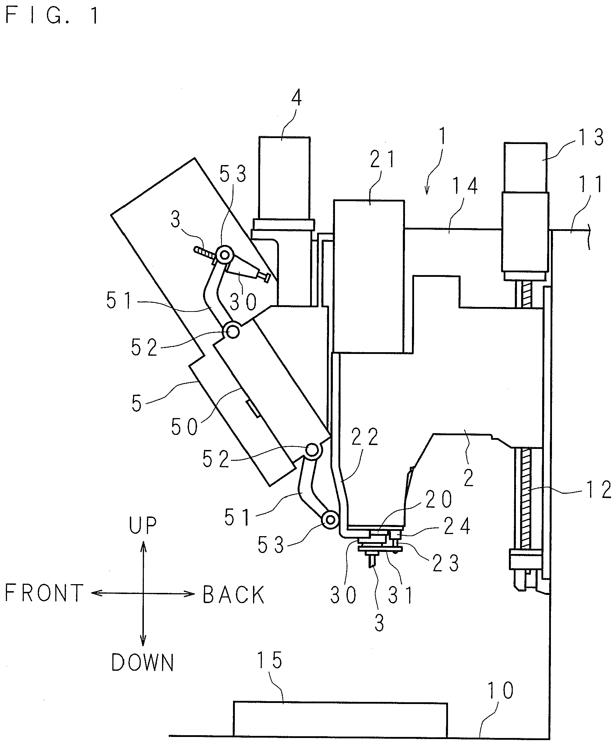

The following description will explain the present invention in detail based on the drawings showing Embodiment thereof. Directions (front, back, up, down) used in the following description are shown with arrows in FIG. 1.

As shown in FIG. 1, the machine tool 1 comprises a column 11 which stands perpendicularly to an upper face of a base 10. The column 11 supports a main-shaft head 2. The main-shaft head 2 is capable of moving up and down along a guide provided in a front face of the column 11. The column 11 comprises a feed screw shaft 12 extending up and down. The feed screw shaft 12 is connected to a Z-axis motor 13 fixed to an upper part of the column 11, and rotates about its central axis by the drive of the Z-axis motor 13. Aback part of the main-shaft head 2 is screwed onto the feed screw shaft 12. The main-shaft head 2 moves up and down according to the rotation of the feed screw shaft 12 by the drive of the Z-axis motor 13.

The main-shaft head 2 supports a main shaft 20 therein. The main shaft 20 is connected to a main-shaft motor 21 fixed to an upper part of the main-shaft head 2, and rotates about its central axis extending up and down, by the drive of the main-shaft motor 21. A lower end part of the main shaft 20 projects below the main-shaft head 2, and holds a later-described tool 3. The tool 3 moves up and down with the main-shaft head 2.

A tool magazine 5 accommodates a plurality of the tools 3. The tools 3 include not only rotating tools, such as a drill, a tap, and an end mill, but a turning tool which is used at a time of stopping rotation of the main shaft 20. The column 11 supports a column cover 14 extending forward, and the column cover 14 supports the tool magazine 5 at a front end thereof. The tool magazine 5 is located on an upper front part of the main-shaft head 2. The tool magazine 5 comprises a disc-shaped magazine body 50. The magazine body 50 rotates about an axis inclining with the front part pointing downward by the drive of a magazine motor 4 provided in an upper part of the tool magazine 5.

The magazine body 50 comprises a plurality of tool grips 51, 51 ... (gripping means) which extend radially outward in a radial direction of the magazine body 50. The magazine body 50 supports the tool grips 51 on an outer circumference of the magazine body 50 so as to swing about a supporting shaft 52 extending in a circumferential direction of the magazine body 50.

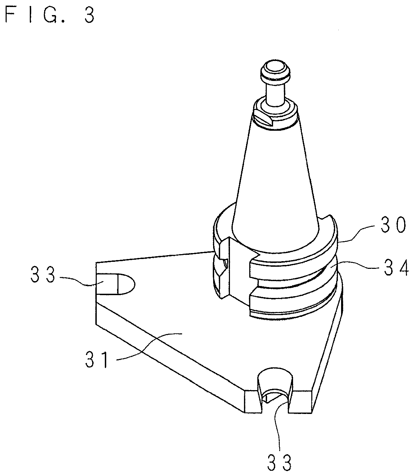

The known tool holders 30 hold the tools 3. Each tool grip 51 has a tip grip part branching to two forks, and pushes the tip grip part into a holding groove 34 (refer to FIG. 3) provided on an outer circumference of the tool holder 30, and thereby grips the tool 3 via the tool holder 30. FIG. 1 shows a state where the tool grip 51 located at an upper position is gripping the tool 3.

FIG. 1 shows a state where the tool grip 51 located at a lower position in FIG. 1 is not gripping the tool 3. The tip grip part of each tool grip 51 has a roller 53 capable of rotating about a horizontal axis. The roller 53 is in contact with a guide plate 22 provided on a front face of the main-shaft head 2 in a state where the tool grip 51 is not gripping the tool 3, and is in a posture where it swings about the supporting shaft 52 forward.

At the time of processing, the main-shaft head 2 moves down from an original position (a position of the main-shaft head 2 shown in FIG. 1), and when the tools are exchanged, the main-shaft head 2 moves up from the original position. The tool grip 51 located at the lower position follows the moving up and down of the main-shaft head 2, and swings, by the rolling of the roller 53 on a face of the guide plate 22. When the main-shaft head 2 moves up, the roller 53 separates from a lower end of the guide plate 22. Therefore, the tool grip 51 swings about the supporting shaft 52 backward, and the tip grip part of the tool grip 51 grips the tool 3 attached to the main shaft 20 via the tool holder 30 from the front.

The main-shaft head 2 moves up further after the gripping of the tool holder 30 is completed. The tool holder 30 gripped by the tool grip 51 moves down relatively, and separates from the main shaft 20 with the tool 3. The magazine body 50 rotates in this state, and the tool grip 51 holding the tool 3 to be used next is located below the main shaft 20.

When the main-shaft head 2 moves down, the main shaft 20 attaches the tool holder 30 to the lower end part thereof, and the tool grip 51 swings forward. Therefore, the tip grip part does not grip the tool holder 30.

The machine tool 1 exchanges the tools 3 between the main shaft 20 and the tool magazine 5 by the above-described operation. The machine tool 1 comprises a working table 15 on the base 10 ahead of the column 11. The tool 3 attached to the main shaft 20 moves down from the original position with the main-shaft head 2, and processes a workpiece on the working table 15.

When the tool 3 is a rotating tool, the tool 3 attached to the main shaft 20 rotates with the main shaft 20 by the drive of the main-shaft motor 21. The workpiece is fixed on an upper face of the working table 15, and moves left/right and backward/forward with the working table 15. The tool 3 rotating with the main shaft 20 moves up and down with the main-shaft head 2, and processes the workpiece on the working table 15.

When the tool 3 is a turning tool for turning process, the main shaft 20 is locked in a non-rotation state. The workpiece is mounted on a turntable (not shown) provided on the working table 15, and rotates by the operation of the turntable. The tool 3 moves down with the main-shaft head 2, presses the tip of the tool 3 on the rotating workpiece, and thereby turns a surface of the workpiece.

FIG. 1 shows a state where the tool 3 for turning process is attached to the main shaft 20. The tool holder 30 for the tool 3 comprises a rotation locking flange 31 widening towards the back. Engaging projections 23 projecting downwards at back positions of the main shaft 20 are provided on a lower face of the main-shaft head 2. The rotation locking flange 31 and the engaging projections 23 are engaged with each other when the tool 3 is attached to the main shaft 20. Therefore, the rotation locking flange 31 and the engaging projections 23 prevent the rotation about a central axis of the tool 3 and the movement of the tool by the force in the radial direction, and the machine tool 1 can perform a turning process with high process precision.

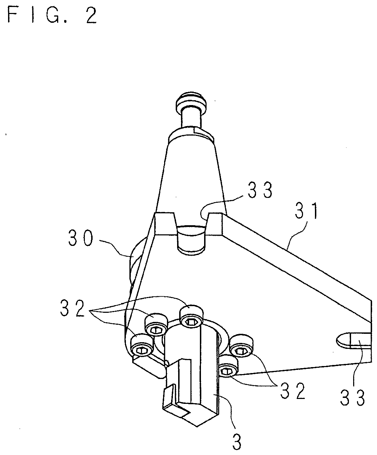

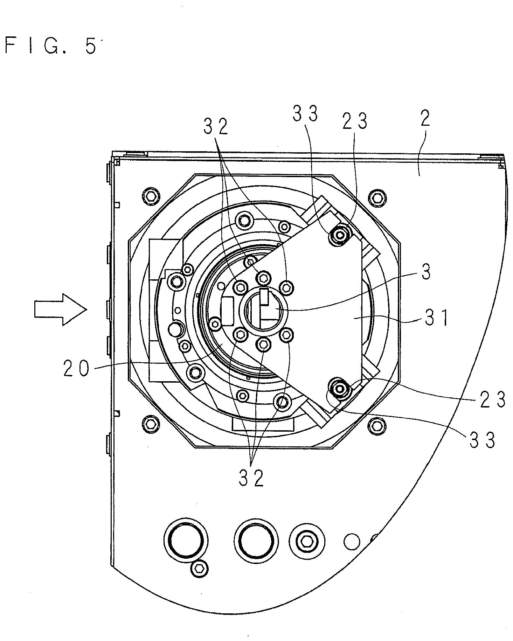

As shown in FIG. 5, the rotation locking flange 31 is a flange having a triangle shape in a plan view, and the vicinity of one vertex is fixed to a lower face of the tool holder 30 by a plurality of fixing bolts 32, 32 .... As shown in FIGS. 2 to 5, the rotation locking flange 31 is provided on a part of the outer circumference of the tool holder 30, and specifically is provided so as to widen outward in a radial direction of the tool holder 30.

Two engaging holes 33, 33 are formed in the rotation locking flange 31 so as to align on a circumference of a circle coaxial with the tool holder 30. The engaging holes 33, 33 are oblong holes which are formed near the remaining two vertexes of the rotation locking flange 31 and extend in a radial direction. Although one sides of the engaging holes 33, 33 are open at an outer circumference of the rotation locking flange 31, such a configuration in which the engaging holes 33, 33 are open is not indispensable, and the engaging holes 33, 33 may be oblong holes which are closed within the rotation locking flange 31.

Gaps between the engaging projections 23, 23 and the engaging holes 33, 33 which are oblong holes are larger than gaps between the engaging projections 23, 23 and the engaging holes 33, 33 which are circles. Scraps which may catch on the engaging holes 33, 33 fall from the gaps. Therefore, the engaging projections 23, 23 and the engaging holes 33, 33 are not injured by the scraps.

The engaging holes 33, 33 are provided at positions such that an angle between center lines extending from centers of the engaging holes 33, 33 to centers of the tool 3 and the tool holder 30 respectively is approximately 90 degrees on a backward side when the tool 3 is attached to the main shaft 20. The angle between the center lines is not limited to 90 degrees, but can be appropriately set within a range in which the rotation locking flange 31 is formed. Although the angle should be more than 0 degree and less than 180 degrees, it is desirable that the angle is not less than 85 degrees and less than 100 degrees. When the angle is 180 degrees, the two engaging holes 33, 33 are located on a straight line. When the direction of the force in the radial direction (a direction normal to an axial direction of the turning tool) which acts on the turning tool is identical to a direction of the straight line, the engaging projections 23, 23 and the engaging holes 33, 33 sometimes do not bear the force in the radial direction since the engaging projections 23, 23 relatively move within the engaging holes 33, 33. When the angle is approximately 180 degrees, even if a direction of one center line is identical to the direction of the force in the radial direction, they can bear the force since a direction of the other center line is not identical to the direction of the force in the radial direction. However, the more the angle is approximate to 180 degrees, the smaller the force borne by the engaging projections 23, 23 and the engaging holes 33, 33 is. The reason is that, with respect to component forces of the force borne by the engaging projections 23, 23 and the engaging holes 33, 33 (the component forces of directions which are orthogonal to each other), the more the angle is approximate to 180 degrees, the larger the force of the direction of the center line is, thus the engaging projections 23, 23 and the engaging holes 33, 33 cannot bear the larger force. Therefore, when the center lines are orthogonal to each other, even if the direction of the one center line is identical to the direction of the force in the radial direction, the engaging projection 23 and the engaging hole 33 located on the other center line can bear all of the force in the radial direction.

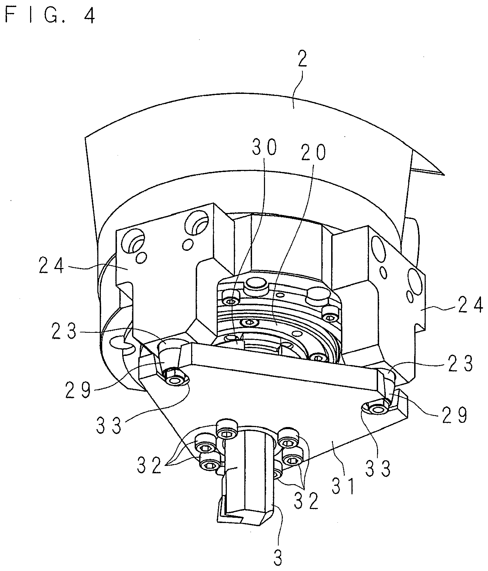

As shown in FIG. 4, the engaging projections 23, 23 project downward from support blocks 24, 24 fixed to an outer circumference of a lower end cylinder part of the main-shaft head 2. In order that the engaging projections 23, 23 can be engaged with the engaging holes 33, 33 of the rotation locking flange 31, positions of the engaging projections 23, 23 are set on a circumference of a circle coaxial with the main shaft 20 to which the tool holder 30 is attached, and on lines which pass through a center of the main shaft 20 and are open approximately at an angle of 90 degrees on the backward side.

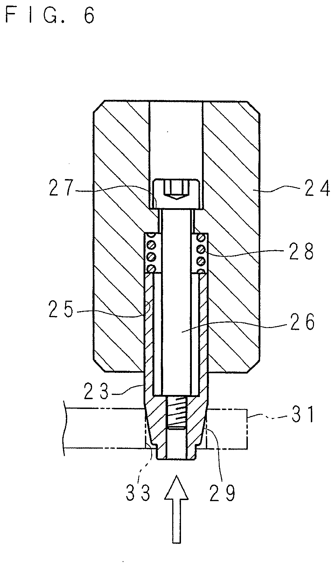

As shown in FIG. 6, the engaging projection 23 is a hollow round bar, and is located in a supporting hole 25 which is provided in the support block 24 and extends up and down. The engaging projection 23 can slide in an axial direction. In a hollow part of the engaging projection 23, a stopper bolt 26 is inserted. The stopper bolt 26 is joined to a lower part of the engaging projection 23 by a threaded part provided in a lower end of the stopper bolt 26, and a head part of the stopper bolt 26 is in contact with an upper face of a step part 27 provided in an inner circumference of an intermediate part of the supporting hole 25. A lower face of the step part 27 opposes an upper end part of the engaging projection 23. The support block 24 interposes a compression spring 28 (biasing means) between the engaging projection 23 and the step part 27.

Since the head part of the stopper bolt 26 contacts the step part 27 and the lower end of the stopper bolt 26 is joined to the engaging projection 23, the engaging projection 23 does not come off the support block 24 and projects from the lower end of the support block 24. A reduced diameter part 29 whose diameter is reduced so as to taper towards an end part of the engaging projection 23 is provided in a projecting part of the engaging projection 23. The engaging projection 23 moves upward against the biasing of the compression spring 28, by the action of upward force (a hollow arrow in FIG. 6) which is applied to the projecting part. The engaging hole 33 of the rotation locking flange 31 which is engaged with the engaging projection 23 from below contacts any position of the reduced diameter part 29, and the engaging projection 23 is closely engaged with the engaging hole 33 in a state where it is pushed up.

As shown in FIGS. 4 and 5, since the two engaging holes 33, 33 of the rotation locking flange 31 are engaged with the respective engaging projections 23, 23, the main-shaft head 2 to which the support block 24 is mounted restrains the rotation of the rotation locking flange 31. Therefore, the tool holder 30 provided with the rotation locking flange 31, and the tool 3 for turning process held by the tool holder 30 do not rotate with force applied in the circumferential direction during processing.

The engaging holes 33, 33 are provided at positions such that the angle between the center lines extending from the centers of the engaging holes 33, 33 to the centers of the tool 3 and the tool holder 30 respectively is approximately 90 degrees. Therefore, even if the force in the radial direction of various directions is applied to the tool 3 during a turning process, at least one of the engaging holes 33 and the engaging projections 23 bear the force in the radial direction. Therefore, the engaging holes 33 and the engaging projections 23 reliably prevent the movement in the radial direction of the tool 3. A similar movement prevention effect is obtained by the engaging holes 33, 33 appropriately located within the range where the rotation locking flange 31 is formed. However, when the engaging holes 33, 33 are provided at the positions such that the angle between the center lines is 90 degrees as shown in Embodiment, a satisfactory movement prevention effect is obtained.

The tool 3 for turning process does not move with any force applied during processing. The tool 3 can process a workpiece stably with high precision.

The rotation locking flange 31 is provided on the outer circumference of the tool holder 30 so as to widen outward in the radial direction, and the tool holder 30 causes the engaging projections 23, 23 which are provided on the main-shaft head 2 to engage with the engaging holes 33, 33 of the rotation locking flange 31. The rotation locking flange 31 is attached to the main shaft 20 so as to widen backward. Therefore, as shown with a hollow arrow in FIG. 5, the tip grip part of the tool grip 51 which moves from the front grips the tool holder 30 reliably, without interfering with the rotation locking flange 31, and the machine tool 1 can exchange the tools 3 between the main shaft 20 and the tool magazine 5 reliably.

A modification in which Embodiment as described above is partly modified will be explained.
1) The tool magazine 5 is not limited to the configuration and arrangement as shown in Embodiment, but can be modified to the known configuration and arrangement.
2) The rotation locking flange 31 is not limited to the triangle shape as shown in Embodiment, but can be modified to an appropriate shape which meets a requirement that the rotation locking flange 31 widens outward in the radial direction on the outer circumference of the tool holder 30.
3) The biasing means which biases the engaging projection 23 in a projection direction is not limited to the compression spring 28, but may be other biasing means, such as an air pressure cylinder.

## Claims

1. A machine tool (1) that selectively attaches/removes a rotating tool (3) or a turning tool (3) which is used at a time of stopping rotation of a main shaft (20) of the machine tool (1) via respective tool holders (30) of the machine tool (1) to/from an end part of the main shaft (20) which is supported by a main-shaft head (2) of the machine tool (1) and which rotates about a central axis thereof, and that processes a workpiece with the rotating tool (3) or the turning tool (3) attached to the main shaft (20), wherein the machine tool (1) comprises a rotation locking flange (31) provided on a part of an outer circumference of the tool holder (30) for holding the turning tool (3), **characterized in that**
the rotation locking flange (31) widens outward in a radial direction of the tool holder (30), and
wherein the machine tool (1) further comprises:
two engaging holes (33) formed at positions which are different from each other in a circumferential direction of the rotation locking flange (31); and
two engaging projections (23) projecting from the main-shaft head (2) so as to engage with the respective engaging holes (33), and
wherein a grip part of a tool grip (51) of the machine tool (1) is configured to move from the front to grip the tool holder (30), and
wherein the rotation locking flange widens backwardly, so as to not obstruct a tool exchanging when the grip part of the tool grip (51) moves from the front.

2. The machine tool according to Claim 1, wherein
the engaging holes (33) are provided at positions such that an inner angle formed by center lines extending from centers of the engaging holes (33) to a center of the tool holder (30) respectively is not less than 85 degrees and less than 100 degrees.

3. The machine tool according to Claim 1 or 2, wherein
the engaging projections (23) have reduced diameter parts (29) whose diameters are reduced towards their tips, and
the main-shaft head (2) supports the engaging projections (23) slidably, and has biasing means (28) for biasing the engaging projections (23) towards a tip side.

4. The machine tool according to any one of Claims 1 to 3, wherein the tool grip (51) moves and then grips the respective tool holder (30) when the rotating tool (3) or the turning tool (3) is attached/removed,
wherein the engaging projections (23) are provided on a side of the respective tool holder (30) opposite to a side on which the tool grip (51) moves.

5. The machine tool according to any one of Claims 1 to 4, wherein
the engaging holes (33) are oblong holes extending in the radial direction of the tool holder (30).

## Patentansprüche

1. Maschinenwerkzeug (1), das wahlweise ein Drehwerkzeug (3) oder ein Rotationswerkzeug (3), das zur Zeit eines Stopps einer Drehung einer Hauptwelle (20) des Maschinenwerkzeugs (1) verwendet wird, über jeweilige Werkzeughalter (30) des Maschinenwerkzeugs (1) zu/von einem Endteil der Hauptwelle (20) anbringt/löst, die durch einen Hauptwellenkopf (2) des Maschinenwerkzeugs (1) gestützt ist und sich um ihre Mittelachse dreht, und das ein Werkstück mit dem Drehwerkzeug (3) oder dem Rotationswerkzeug (3) bearbeitet, das an der Hauptwelle (20) angebracht ist, wobei das Maschinenwerkzeug (1) einen Drehverriegelungsflansch (31) aufweist, der an einem Teil eines Außenumfangs des Werkzeughalters (30) zum Halten des Rotationswerkzeugs (3) vorgesehen ist, **dadurch gekennzeichnet, dass**
sich der Drehverriegelungsflansch (31) in einer radialen Richtung des Werkzeughalters (30) aufweitet, und
wobei das Maschinenwerkzeug (1) des Weiteren folgendes aufweist:
zwei Eingriffslöcher (33), die an Positionen ausgebildet sind, die sich in einer Umfangsrichtung des Drehverriegelungsflansches (31) voneinander unterscheiden; und
zwei Eingriffsvorsprünge (23), die von dem Hauptwellenkopf (2) so vorstehen, dass sie mit den jeweiligen Eingriffslöchern (33) in Eingriff gelangen, und
wobei ein Greifteil eines Werkzeuggreifers (51) des Maschinenwerkzeugs (1) dazu konfiguriert ist, sich von der Vorderseite zum Greifen des Werkzeughalters (30) zu bewegen, und
wobei sich der Drehverriegelungsflansch nach hinten aufweitet, um so einen Werkzeugaustausch nicht zu behindern, wenn der Greifteil des Werkzeuggreifers (51) von der Vorderseite bewegt wird.

2. Maschinenwerkzeug gemäß Anspruch 1, wobei
die Eingriffslöcher (33) an Positionen derart vorgesehen sind, dass ein Innenwinkel, der durch Mittellinien gebildet ist, die sich von mitten der Eingriffslöcher (33) zu einer Mitte des Werkzeughalters (30) jeweils erstrecken, nicht kleiner ist als 85 Grad und kleiner als 100 Grad.

3. Maschinenwerkzeug gemäß Anspruch 1 oder 2, wobei
die Eingriffsvorsprünge (23) Teile (29) mit reduziertem Durchmesser haben, deren Durchmesser sich zu ihren Spitzen reduzieren und,
der Hauptwellenkopf (2) die Eingriffsvorsprünge (23) gleitend stützt und eine Vorspanneinrichtung (28) zum Vorspannen der Eingriffsvorsprünge (23) zu einer Spitzenseite hat.

4. Maschinenwerkzeug gemäß einem der Ansprüche 1 bis 3, wobei sich der Werkzeuggreifer (51) bewegt und dann den jeweiligen Werkzughalter (30) greift, wenn das Drehwerkzeug (3) oder das Rotationswerkzeug (3) angebracht/gelöst wird,
wobei die Eingriffsvorsprünge (23) an einer Seite des jeweiligen Werkzeughalters (30) vorgesehen sind, die einer Seite entgegengesetzt ist, an der sich der Werkzeughalter (51) bewegt.

5. Maschinenwerkzeug gemäß einem der Ansprüche 1 bis 4, wobei
die Eingriffslöcher (33) Langlöcher sind, die sich in der radialen Richtung des Werkzeughalters (30) erstrecken.

## Revendications

1. Machine-outil (1) qui s'attache et retire sélectivement un outil rotatif (3) ou un outil tournant (3) qui est utilisé au moment de l'arrêt de la rotation d'un arbre principal (20) de la machine-outil (1), via des porte-outils respectifs (30) de la machine-outil (1), vers et depuis une partie d'extrémité de l'arbre principal (20) qui est supportée par une tête d'arbre principal (2) de la machine-outil (1) et tourne autour d'un axe central de celui-ci, et qui traite une pièce de travail avec l'outil rotatif (3) ou l'outil tournant (3) attaché à l'arbre principal (20), dans laquelle la machine-outil (1) comprend une bride de verrouillage de rotation (31) prévue sur une partie d'une circonférence extérieure du porte-outil (30) pour contenir l'outil tournant (3), **caractérisée en ce que**
la bride de verrouillage de rotation (31) s'élargit vers l'extérieur dans une direction radiale du porte-outil (30), et
dans laquelle la machine-outil (1) comprend en outre :
deux trous de prise (33) formés dans des positions différentes l'une de l'autre dans une direction circonférentielle de la bride de verrouillage de rotation (31) ; et
deux saillies de prise (23) dépassant de la tête d'arbre principal (2) de manière à venir en prise avec les trous de prise respectifs (33), et
dans laquelle une partie de préhension d'un manche d'outil (51) de la machine-outil (1) est configurée pour se déplacer depuis l'avant pour saisir le porte-outil (30), et
dans laquelle la bride de verrouillage de rotation s'élargit vers l'arrière de manière à ne pas entraver un changement d'outil lorsque la partie de préhension du manche d'outil (51) se déplace depuis l'avant.

2. Machine-outil selon la revendication 1, dans laquelle
les trous de prise (33) sont prévus dans des positions de manière à ce qu'un angle intérieur formé par des lignes centrales s'étendant depuis des centres des trous de prise (33) vers un centre du porte-outil (30) respectivement ne soit pas inférieur à 85 degrés et de moins de 100 degrés.

3. Machine-outil selon la revendication 1 ou 2, dans laquelle
les saillies de prise (23) présentent des parties au diamètre réduit (29) dont les diamètres sont diminués vers leurs extrémités, et
la tête d'arbre principal (2) supporte les saillies de prise (23) de manière coulissante, et présente un moyen d'inclinaison (28) afin d'incliner les saillies de prise (23) vers un côté d'extrémité.

4. Machine-outil selon l'une quelconque des revendications 1 à 3, dans laquelle le manche d'outil (51) se déplace et saisit ensuite le porte-outil respectif (30) lorsque l'outil rotatif (3) ou l'outil tournant (3) est attaché/retiré,
dans laquelle les saillies de prise (23) sont prévues sur un côté du porte-outil respectif (30) à l'opposé d'un côté sur lequel le manche d'outil (51) se déplace.

5. Machine-outil selon l'une quelconque des revendications 1 à 4, dans laquelle
les trous de prise (33) sont des trous oblongs s'étendant dans la direction radiale du porte-outil (30).
